# EUROPÄISCHE PATENTSCHRIFT

(11) **EP 2 562 115 B1**
(45) Veröffentlichungstag und Bekanntmachung des Hinweises auf die Patenterteilung: **20.07.2016**
(21) Anmeldenummer: 12181504.7
(22) Anmeldetag: 23.08.2012
(51) Int. Cl.: B65H 75/44, A01K 27/00

(54) **Vorrichtung zum Aufrollen und Abrollen einer Leine**
Device for winding and unwinding a line
Dispositif enrouleur et dérouleur d'une ligne

(30) Priorität: 23.08.2011 DE 102011110835
(43) Veröffentlichungstag der Anmeldung: 27.02.2013
(73) Patentinhaber: Flexi-Bogdahn Technik GmbH & Co. KG, 22941 Bargteheide (DE)
(72) Erfinder: Bogdahn, Manfred, 22391 Hamburg (DE); Groth, Jürgen, 23860 Groß Schenkenberg (DE)
(74) Vertreter: Tappe, Udo

(56) Entgegenhaltungen:
- EP-A1- 0 093 445
- WO-A1-01/13713
- DE-U1- 8 509 585
- JP-A- 2006 174 738
- US-A1- 2010 206 246
- US-A1- 2011 067 649
- US-A1- 2011 180 017

## Beschreibung

Die Erfindung betrifft eine Vorrichtung zum Aufrollen und Abrollen einer Leine, insbesondere zum Führen eines Tieres, mit einer Leinenrolle, und mit einer Blockiereinrichtung, die ein Betätigungselement und ein Feststellelement hat, wobei die Leinenrolle mittels der Blockiereinrichtung zum Blockieren einer Abrollbewegung der Leinenrolle blockierbar und das Betätigungselement mittels einer Betätigungsbewegung betätigbar ist, und wobei aufgrund der Betätigungsbewegung des Betätigungselements eine Feststellbewegung des Feststellelements zum Blockieren der Abrollbewegung der Leinenrolle auslösbar ist.

Eine derartige Vorrichtung ist aus der DE 200 19 939 U1 bekannt. Das Betätigungselement der Blockiereinrichtung ist als eine Bremstaste ausgebildet, die bei einer Betätigung durch eine Person durch Niederdrücken der Bremstaste in eine Wirkposition zum Blockieren einer Abrollbewegung bewegbar ist. Aufgrund der Betätigung des Betätigungselementes wird zudem ein Feststellelement in eine Wirkposition zum Blockieren der Abrollbewegung bewegt. In der Wirkposition kann das Feststellelement gegen einen von mehreren Vorsprüngen entlang des Umfanges der Leinenrolle anschlagen, so dass eine Abrollbewegung verhindert ist. Hierbei weist der Vorsprung eine erste Flanke auf, gegen die das Feststellelement anschlägt. Diese erste Flanke ist rechtwinklig oder mit einem spitzen Öffnungswinkel zu einer Umfangsfläche der Leinenrolle angeordnet.

Hierbei ist nachteilig, dass zum Betätigen des Betätigungselementes und/oder dem Erreichen einer Wirkposition für das Feststellelement zum Blockieren der Abrollbewegung der Leinenrolle eine große Betätigungsbewegung durch eine die Vorrichtung bedienende Person notwendig ist. Hierdurch besteht bei einer wiederholten Tätigkeit die Gefahr einer Ermüdung, insbesondere eines für die Betätigung des Betätigungselementes genutzten Daumens und/oder Fingers.

Zudem besteht die Gefahr, dass das Feststellelement in einer nicht hinreichend in Richtung eines Vorsprunges niedergedrückten oder niedergeschwenkten Position und bei einer Zugbelastung der Leine in Richtung der Abrollbewegung über die Vorsprünge hinweg gleitet. Hierbei entstehen unerwünschte Störgeräusche, insbesondere ein Rattern und ein erhöhter Verschleiß. Aufgrund der für das Betätigungselement notwendigen großen Betätigungsbewegung ist ein für die Entstehung von Störgeräuschen anfälliger großer Bereich zwischen einer unbetätigten Stellung des Betätigungselementes und einer vollständig betätigten, insbesondere niedergedrückten, Stellung des Betätigungselementes gegeben.

Aus der US 2011/0067649 A1 ist eine Leineneinrichtung mit zwei Rollleinen zum Halten von Tieren bekannt, wobei für jede Rollleine jeweils eine Bremstaste vorgesehen ist. Die Bremstaste wirkt jeweils mit einer Art federgelagerten Teller zusammen, der wiederum einen Vorsprung hat. Durch ein Drücken der Bremstaste wird der Vorsprung auf einen schwenkbar gelagerten Hebel gedrückt.

Das Dokument JP 2006 174 738 A1 beschreibt eine Leineneinrichtung zum Halten eines Tieres mit einer Leinenrolle. Am Außenumfang der Leinenrolle sind mehrere Vorsprünge angeordnet, wobei die Vorsprünge unterschiedlich gestaltete Flanken haben.

Aus der DE 85 09 585 U1 ist eine Leineneinrichtung mit einer Begrenzungseinrichtung zum Festlegen einer vorgegebenen und von einer maximalen abrollbaren Leinenlänge abweichenden kürzeren Teilleinenlänge bekannt.

Es ist das der Erfindung zugrunde liegende Problem eine Vorrichtung der eingangs genannten Art derart weiter zu entwickeln, dass eine Positionierung der Blockiereinrichtung zum Erzeugen eines Störgeräusches möglichst erschwert und gleichzeitig der Bedienkomfort verbessert wird.

Zur Lösung des der Erfindung zugrunde liegenden Problems ist die Vorrichtung der eingangs genannten Art dadurch gekennzeichnet, dass die Betätigungsbewegung mittels eines Übertragungsmittels auf eine zur Betätigungsbewegung größere Feststellbewegung des Feststellelementes übertragbar ist, wobei das Feststellelement zum Umwandeln einer Betätigungsbewegung in eine Schwenkbewegung verschwenkbar zum Betätigungselement mit dem Betätigungselement verbunden ist, und das Betätigungselement eine durch eine Person bedienbare Bremstaste ist, das Feststellelement ist als eine Anschlagsfläche ausgebildet und ist dem als Hebel ausgebildeten Übertragungsmittel zugeordnet.

Hierbei ist von Vorteil, dass aufgrund des Übertragungsmittels eine geringere und/oder kleinere Betätigungsbewegung zum Betätigen der Blockiereinrichtung und zum Blockieren der Abrollbewegung der Leinenrolle mittels des Feststellelementes notwendig ist. Insbesondere ist eine Betätigungsstrecke und/oder ein Betätigungshub des Betätigungselementes deutlich reduzierbar. Hierdurch ist der Bedienkomfort der Vorrichtung für eine Person verbessert. Eine frühzeitige Ermüdung der Person bei wiederholter Betätigung der Blockiereinrichtung bzw. des Betätigungselementes ist vermeidbar.

Zudem ist mittels des Übertragungsmittels gewährleistbar, dass die Betätigungsbewegung in eine zum Blockieren der Abrollbewegung der Leinenrolle hinreichend große Feststellbewegung des Feststellelementes übertragbar, insbesondere übersetzbar, ist. Insbesondere ist eine kurze Betätigungsstrecke und/oder ein kurzer Hubweg zur Betätigung des Betätigungselementes ausreichend, um eine hinreichend große Feststellbewegung zum Blockieren der Abrollbewegung der Leinenrolle mittels des Feststellelementes zu bewirken. Mittels des Übertragungsmittels ist eine im Vergleich zur Feststellbewegung kleinere Betätigungsbewegung in eine im Vergleich zur Betätigungsbewegung größere Feststellbewegung übertragbar, insbesondere übersetzbar. Vorzugsweise ist das Übertragungsmittel als ein Übersetzungsmittel ausgebildet.

Insbesondere betrifft die Erfindung eine Vorrichtung zum Aufrollen und Abrollen einer Leine zum Führen eines Tieres, insbesondere für einen Hund und/oder eine Katze. In einer Ruheposition der Blockiereinrichtung ist die Leine, insbesondere ein Seil, ein Band und/oder ein Gurt, entgegen der Kraft eines Rückführelementes, vorzugsweise einer Feder, abrollbar. Wenn keine Zugkraft in Richtung der Abrollbewegung der Leinenrolle auf die Leine wirkt, rollt sich die Leine aufgrund der Kraft des Rückführelementes selbsttätig auf die Leinenrolle auf. Mittels des Betätigungselementes ist die Blockiereinrichtung durch eine Person bedienbar. Insbesondere ist das Betätigungselement als eine Bremstaste ausgebildet. Das Betätigungselement kann verschiebbar und/oder verschwenkbar ausgebildet sein. Mittels des Feststellelementes ist die Blockierung der Abrollbewegung der Leinenrolle erreichbar. Bei einer Blockierung der Abrollbewegung kann zugleich eine Aufrollbewegung mindestens weitgehend blockiert sein. Alternativ kann bei einer Blockierung der Abrollbewegung eine Aufrollbewegung weiterhin möglich sein.

Das Übertragungsmittel weist einen Hebelmechanismus, auf. Demnach kann eine kleine, insbesondere mechanisch realisierte, Betätigungsbewegung in eine größere Feststellbewegung übertragen und/oder übersetzt werden. Insbesondere ist ein Übersetzungsverhältnis zwischen der Feststellbewegung und der Betätigungsbewegung im Bereich zwischen 1,25:1 bis 10:1, insbesondere im Bereich zwischen 1,5:1 und 5:1 gegeben. Besonders bevorzugt ist ein Übersetzungsverhältnis von 2:1 vorgesehen. Bei einem solchen Übersetzungsverhältnis ist die Gefahr der Entstehung von Störgeräuschen um bis zu mindestens 50 % reduzierbar. Somit ist als Übertragungsmittel eine Übersetzung einsetzbar, die die kleinere Betätigungsbewegung in eine hierzu größere Feststellbewegung übersetzt. Insbesondere eignet sich ein Hebelmechanismus zum Realisieren einer geeigneten Übersetzung.

Das Feststellelement ist verschwenkbar zum Betätigungselement. Somit ist die Betätigungsbewegung des Betätigungselementes in eine Schwenkbewegung des Feststellelementes umwandelbar. Hierbei ist das Feststellelement verschwenkbar mit dem Betätigungselement verbunden. Hierdurch ist die Betätigungsbewegung unmittelbar in die Feststellbewegung übertragbar und/oder übersetzbar.

Nach einer weiteren Ausführungsform ist der Leinenrolle mindestens ein Vorsprung zugeordnet, und eine erste Flanke des Vorsprungs wirkt mit dem Feststellelement in einer Wirkposition zum Blockieren der Abrollbewegung der Leinenrolle zusammen. Vorzugsweise ist die erste Flanke des Vorsprungs mit einem stumpfen Öffnungswinkel zu einer Umfangsfläche der Leinenrolle angeordnet. Hierbei ist von Vorteil, dass aufgrund eines stumpfen Öffnungswinkels zwischen der ersten Flanke des Vorsprungs und der Umfangsfläche der Leinenrolle und/oder einer Tangente an der Umfangsfläche im Schnittpunkt der ersten Flanke mit der Umfangsfläche einer Positionierung des Feststellelementes zum Erzeugen von Störgeräuschen erschwert ist. Zudem sind Konstruktionen ermöglicht, die eine vereinfachte und komfortable Bedienung ermöglichen. Weiter kann die Bauhöhe der Vorsprünge reduziert werden, wodurch die benötigte Betätigungsbewegung, die Betätigungsstrecke und/oder ein Hubweg des Betätigungselements, insbesondere um 20%, reduzierbar ist.

Vorzugsweise liegt der stumpfe Öffnungswinkel zwischen 100° und 150°, insbesondere zwischen 110° und 140°. Besondere bevorzugt beträgt der stumpfe Öffnungswinkel 120°. Hierdurch ist eine funktionelle und Platz sparenden Bauweise ermöglicht. Insbesondere sind mehrere Vorsprünge vorgesehen. Hierdurch ist die Abrollbewegung nach dem Betätigen der Blockiereinrichtung auf ein Minimum beschränkbar. Die mehreren Vorsprünge sind vorzugsweise gleichmäßig am Umfang der Leinenrolle verteilt. Die Umfangsfläche kann als eine zweite Flanke mindestens eines weiteren Vorsprungs ausgebildet sein. Somit wird der stumpfe Öffnungswinkel zwischen der zweiten Flanke eines ersten Vorsprungs und der ersten Flanke eines zweiten Vorsprunges gebildet, wobei der erste Vorsprung in Richtung der Abrollbewegung vor dem zweiten Vorsprung angeordnet ist.

Das Feststellelement ist als eine, insbesondere zur ersten Flanke korrespondierend ausgebildete, Anschlagsfläche ausgebildet. Mittels der Anschlagsfläche ist eine zuverlässige Blockierung der Leinenrolle in Richtung der Abrollbewegung realisierbar. Vorzugsweise liegt die Anschlagsfläche in einer Wirkposition zum Blockieren der Abrollbewegung der Leinenrolle mindestens teilweise, insbesondere flächig, an der ersten Flanke an. Hierdurch ist ein zuverlässiger Halt in der Wirkposition erreichbar. Zudem ist aufgrund einer flächigen Aufnahme der wirkenden Kräfte auf die Anschlagsfläche und/oder die erste Flanke eine besonders stabile Konstruktion realisierbar.

Insbesondere ist die Anschlagsfläche tangential und/oder mindestens kreisabschnittsförmig um eine Schwenkachse verschwenkbar. Hierdurch sind einfache und/oder komfortabel bedienbare Konstruktionen ermöglicht. Vorzugsweise ist die Anschlagsfläche, insbesondere zum Erreichen der Wirkposition zum Blockieren der Abrollbewegung der Leinenrolle, in eine der ersten Flanke zugewandten Stellung verschwenkbar. Eine Positionierung des Feststellelementes in einer Störgeräusche erzeugenden Stellung ist deutlich erschwert.

Das Übertragungsmittel ist als ein Hebel ausgebildet. Hierdurch sind Konstruktionen mit einem geeigneten Übersetzungsverhältnis zwischen der Betätigungsbewegung des Betätigungselementes und der Feststellbewegung des Feststellelementes besonders einfach realisierbar. Vorzugsweise ist der Hebel um eine parallel zur Drehachse der Leinenrolle ausgerichtete Schwenkachse verschwenkbar.

Nach einer weiteren Ausführungsform ist der Hebel in der Wirkposition zum Blockieren der Abrollbewegung mit einem Verriegelungswinkel zwischen 10° und 60°, vorzugsweise zwischen 20° und 50° angeordnet. Besonders bevorzugt beträgt der Verriegelungswinkel 30°. Bei einem solchen Verriegelungswinkel ist die Gefahr der Entstehung von Störgeräuschen um bis zu mindestens 50% reduzierbar. Hierbei ergibt sich der Verriegelungswinkel zwischen einer Längsausrichtung des Hebels, insbesondere einer Linie durch den Mittelpunkt der Schwenkachse und einen Mittelpunkt eines Radius einer Kante des Hebels und/oder des Vorsprungs, und einer Tangente an einem Umfangskreis der Leinenrolle, wobei der Berührungspunkt der Tangente mit dem Umfangskreis im Bereich der Kante des Vorsprunges ist. Hierbei ist die Kante des Hebels, insbesondere bei einer Verschwenkbewegung zum Erreichen der Wirkposition, dem Vorsprung und/oder der Umfangsfläche zugewandt.

Die erste Flanke und/oder die Anschlagsfläche können als, insbesondere zueinander korrespondierende, kreisabschnittsförmige Flächen ausgebildet sein. Hierdurch wird ein flächiges Anliegen der Anschlagsfläche an der ersten Flanke bei einer Verschwenkbarkeit der Anschlagsfläche um die Schwenkachse ermöglicht. Vorzugsweise ergibt sich ein Radius der kreisabschnittsförmigen Flächen aufgrund eines Abstandes zwischen der Schwenkachse des Übertragungsmittels und der ersten Flanke und/oder der Anschlagsfläche.

Gemäß einer Weiterbildung ist eine, insbesondere durch eine Person betätigbare, Verrieglung zum Verriegeln und/oder Festhalten des Betätigungselementes in einer Stellung zum Blockieren der Abrollbewegung der Leinenrolle vorgesehen. Somit ist das Betätigungselement in einer Wirkposition zum Blockieren der Abrollbewegung der Leinenrolle mittels der Verriegelung festsetzbar. Das Betätigungselement kann sich somit bei einer sich im Eingriff mit dem Betätigungselement befindenden Stellung nicht mehr aus der Wirkposition in eine Ruheposition zum Freigeben der Leinenrolle bewegen. Hierdurch verbleibt auch das Feststellelement in seiner Wirkposition zum Blockieren der Abrollbewegung. Hierdurch ist eine dauerhafte Betätigung des Betätigungselementes durch eine Person vermeidbar, wodurch der Bedienkomfort weiter verbessert ist. Die Verriegelung kann als ein verschiebbarer und/oder verschwenkbarer Hebel ausgebildet sein. Der Hebel ist vorzugsweise mittels eines Fingers und/oder Daumens bedienbar.

Nach einer Weiterbildung ist ein erstes Blockierelement zum Blockieren einer Aufrollbewegung vorgesehen. Somit ist mittels des Blockierelementes ein Aufrollen der Leine, insbesondere bei einer zum Aufrollen der Leine selbsttätigen Leinenrolle mittels eines Rückführelementes, vermeidbar. Insbesondere ist das erste Blockierelement zum gemeinsamen Betätigen mit dem Feststellelement vorgesehen. Somit ist das erste Blockierelement gemeinsam und/oder gleichzeitig mit dem Feststellelement betätigbar. In einer Wirkposition des Feststellelementes zum Blockieren der Abrollbewegung kann, insbesondere alternativ oder gleichzeitig, eine Wirkposition des ersten Blockierelementes zum Blockieren der Aufrollbewegung realisierbar sein. Insbesondere ist sowohl eine Aufrollbewegung als auch eine Abrollbewegung der Leinenrolle mindestens weitgehend vermeidbar. Vorzugsweise ist eine zweite Flanke und/oder ein zweites Blockierelement zum Zusammenwirken mit dem ersten Blockierelement in einer Wirkposition zum Blockieren der Aufrollbewegung ausgebildet. Insbesondere ist das erste Blockierelement einerseits und die zweite Flanke und/oder das zweite, vorzugsweise der Leinenrolle zugeordnete, Blockierelement andererseits zueinander korrespondierend ausgebildet.

Gemäß einer Weiterbildung ist dem Feststellelement und/oder dem Übertragungsmittel ein Rückstellelement zum Zurückführen aus der Wirkposition zum Blockieren der Leinenrolle in eine Ruheposition zum Freigeben der Leinenrolle für eine Abrollbewegung zugeordnet. Hierdurch ist ein zuverlässiges Freigeben der Leine und/oder der Leinenrolle realisierbar. Ein unerwünschtes Blockieren der Abrollbewegung bei einer fehlenden Betätigung der Blockiereinrichtung bzw. des Betätigungselementes wird vermieden. Zudem sind mittels des Rückstellelementes Fertigungstoleranzen ausgleichbar, wodurch insbesondere eine spielfreie Betätigung gegeben ist. Vorzugsweise ist das Rückstellelement als eine Feder ausgebildet.

Nach einer weiteren Ausführungsform wirkt die Blockiereinrichtung, insbesondere das Feststellelement und/oder das Übertragungsmittel, mit einer Begrenzungseinrichtung zum Festlegen einer vorgegebenen von einer maximal abrollbaren Leinenlänge abweichenden kürzeren Teilleinenlänge zusammen. Mittels der Begrenzungseinrichtung ist somit die abrollbare Leinenlänge zwischen der maximal abrollbaren Leinenlänge und einer hiervon abweichenden kürzeren Teilleinenlänge wählbar. Vorzugsweise ist die Abrollbewegung der Leinenrolle bei einer aktivierten Begrenzungseinrichtung nach einer vorgegebenen Anzahl von Umdrehungen der Leinenrolle um die Drehachse in Richtung der Abrollbewegung blockierbar. Insbesondere wird zum Blockieren der Abrollbewegung das Feststellelement genutzt.

Nachfolgend wird die Erfindung anhand der Figuren näher erläutert. Es zeigen:
- Fig. 1: eine schematische Seitendarstellung einer ersten erfindungsgemäßen Vorrichtung,
- Fig. 2: einen Ausschnitt aus der ersten erfindungsgemäßen Vorrichtung gemäß Fig. 1,
- Fig. 3: eine geschnittene perspektivische Teilansicht einer zweiten erfindungsgemäßen Vorrichtung,
- Fig. 4: eine geschnittene perspektivische Teilansicht einer weiteren erfindungsgemäßen Vorrichtung, und
- Fig. 5: eine geschnittene perspektivische Darstellung eines Ausschnitts der weiteren erfindungsgemäßen Vorrichtung gemäß Fig. 4 mit einem zusätzlichen Rückstellelement.

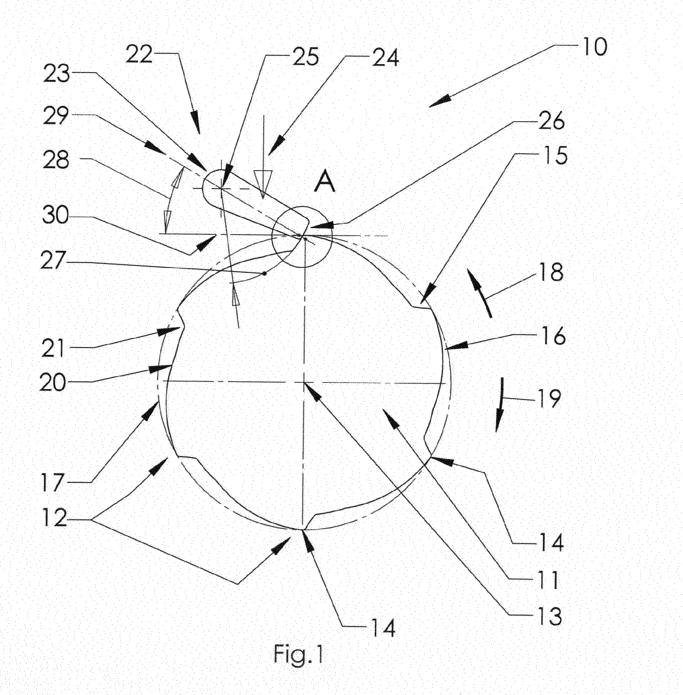

Fig. 1 zeigt eine schematische Seitendarstellung einer ersten erfindungsgemäßen Vorrichtung 10. Die Vorrichtung 10 hat eine Leinenrolle 11. Die Leinenrolle 11 weist mehrere Vorsprünge 12 auf, wobei für eine bessere Übersichtlichkeit nicht alle Vorsprünge 12 mit einem Bezugszeichen versehen sind.

Des Weiteren ist die Leinenrolle 11 um eine Drehachse 13 drehbar gelagert. Die Vorsprünge 12 sind im Bereich des Umfanges der Leinenrolle 11 und radial nach Außen zur Drehachse 13 angeordnet. Der Leinenrolle 11 ist ein Umfangskreis 17 zugeordnet, der hier strichpunktiert dargestellt ist und konzentrisch um die Drehachse 13 verläuft und dessen Radius durch den maximalen radialen Abstand von der Drehachse 13 bis zu Kanten 14 der Vorsprünge 12 bestimmt ist. Die Vorsprünge 12 haben jeweils eine erste Flanke 15 und eine zweite Flanke 16. Die erste Flanke 15 und die zweite Flanke 16 laufen jeweils in einer Kante 14 eines Vorsprunges 12 zusammen, wobei die Kante 14 auf dem Umfangskreis 17 angeordnet ist.

Mittels der Leinenrolle 11 und der Drehachse 13 ist eine hier nicht näher dargestellte Leine von der Leinenrolle 11 abwickelbar und auf die Leinenrolle 11 aufwickelbar. Zum Abwickeln bzw. Abrollen der Leine ist die Leinenrolle 11 in Richtung des Pfeils 18 drehbar. Zum Aufwickeln bzw. Aufrollen der Leine ist die Leinenrolle 11 in Richtung des Pfeils 19 drehbar. Ausgehend von der Kante 14 eines Vorsprunges 12 ist die jeweils zugehörige erste Flanke 15 in Richtung der Abrollbewegung gemäß Pfeil 18 angeordnet, während die jeweils zugehörige zweite Kante 16 ausgehend von der Kante 14 in Richtung der Aufrollbewegung gemäß Pfeil 19 angeordnet ist.

Die zweite Flanke 16 ist als eine Umfangsfläche 20 ausgebildet. In dem hier gezeigten Ausführungsbeispiel weist die zweite Flanke 16 bzw. die Umfangsfläche 20 eine im Querschnitt kreisabschnittsförmige Gestalt auf, die sich von jeweils einer Kante 14 eines ersten Vorsprunges 12 bis zu einer ersten Flanke 15 eines zweiten Vorsprunges 12 erstreckt, wobei der erste Vorsprung 12 in Abrollrichtung 18 unmittelbar vor dem zweiten Vorsprung 12 angeordnet ist.

Die erste Flanke 15 ist jeweils mit einem stumpfen Winkel 21 zu der in Abrollrichtung 18 der ersten Flanke 15 vorgelagerten Umfangsfläche 20 angeordnet. In dem hier gezeigten Ausführungsbeispiel beträgt der stumpfe Winkel 21 120°.

Weiter ist eine Blockiereinrichtung 22 vorgesehen. Die Blockiereinrichtung 22 umfasst ein Übertragungsmittel 23 und ein hier nicht näher dargestelltes Betätigungselement, wobei das Betätigungselement gemäß Pfeil 24 aufgrund einer Betätigungsbewegung durch eine Person in Richtung der Leinenrolle 11 und den Umfangskreis 17 bewegbar ist. Hierbei wird eine Betätigungsbewegung des Bedienelementes mittels des Übertragungsmittels 23 in eine Feststellbewegung eines Feststellelementes 26 übersetzt. Dies erfolgt derart, dass eine im Vergleich zur Feststellbewegung kleinere Betätigungsbewegung in eine im Vergleich zur Betätigungsbewegung größere Feststellbewegung umgewandelt wird. In dem hier gezeigten Beispiel beträgt das Übersetzungsverhältnis von der Feststellbewegung zur Betätigungsbewegung 2:1.

Das Feststellelement 26 ist dem Übertragungsmittel 23 zugeordnet. In dem hier gezeigten Ausführungsbeispiel ist das Feststellelement 26 als eine Anschlagsfläche 26 ausgebildet.

Das Übertragungsmittel 23 ist um eine Schwenkachse 25 drehbar bzw. verschwenkbar gelagert. Die Schwenkachse 25 ist parallel zur Drehachse 13 angeordnet. In dem hier gezeigten Ausführungsbeispiel ist das Übertragungsmittel 23 als ein Hebel 23 ausgebildet. Ausgehend von der Schwenkachse 25 ist ein kurzes Ende des Hebels 23 von der Leinenrolle 11 und den Vorsprüngen 12 abgewandt. Ein ausgehend von der Schwenkachse 25 langes Ende des Hebels 23 ist der Leinenrolle 11 und den Vorsprüngen 12 zugewandt. Der Hebel 23 weist an dem langen Ende die Anschlagsfläche 26 auf. Die Anschlagsfläche 26 ist stirnseitig an dem Hebel 23 und dessen langen Ende angeordnet. Somit ist die Anschlagsfläche 26 der Leinenrolle 11 und der ersten Flanke 15 der Vorsprünge 14 zugewandt.

Die Anschlagsfläche 26 ist zu der ersten Flanke 15 korrespondierend ausgebildet. In dem hier gezeigten Ausführungsbeispiel sind die Anschlagsfläche 26 und die erste Flanke 15 als zueinander korrespondierende im Querschnitt kreisabschnittsförmige Flächen ausgebildet. Hier ist den kreisabschnittsförmigen Flächen ein Radius 27 zugeordnet, der sich als der Abstand zwischen der Schwenkachse 25 und der Anschlagsfläche 26 bzw. der ersten Flanke 15 ergibt. Hierbei bildet die Schwenkachse 25 zugleich den Mittelpunkt des Radius 27. In dem hier gezeigten Ausführungsbeispiel beträgt dieser Radius 25 mm.

Der Hebel 23 befindet sich gemäß Fig. 1 in einer Wirkposition, in der eine Abrollbewegung der Leinenrolle 11 in Richtung des Pfeils 18 blockiert ist, da die Anschlagsfläche 26 teilweise an der ersten Flanke 15 anliegt. Alternativ zu der hier gezeigten Darstellung kann der Hebel 23 derart in Richtung der Leinenrolle 11 um die Schwenkachse 25 verschwenkt sein, dass die Anschlagsfläche 26 vollständig an der ersten Flanke 15 anliegt und der Hebel 23 den zwischen der ersten Flanke 15 und der Umfangsfläche 20 gebildeten Winkel 21 ausfüllt und/oder der Hebel 23 mindestens teilweise an der Umfangsfläche 20 anliegt.

In der Wirkposition, in der eine Abrollbewegung blockiert ist, ist der Hebel 23 mit einem Verriegelungswinkel 28 angeordnet, der hier 30° beträgt. Alternativ hierzu sind hiervon abweichende Verriegelungswinkel, insbesondere im Bereich zwischen 10° und 60°, denkbar. Hierbei ergibt sich der Verriegelungswinkel 28 zwischen einer Linie 29 und einer Tangente 30. Hierbei liegt die Tangente 30 an dem Umfangskreis 17 der Leinenrolle 11 an.

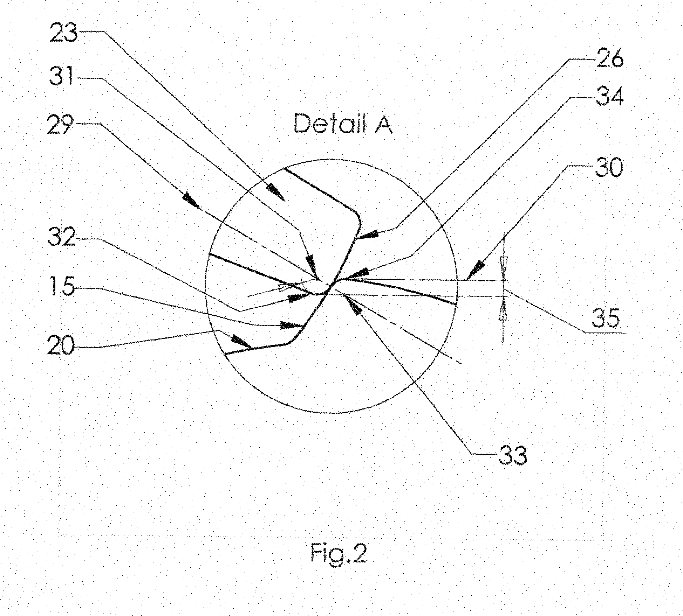

Fig. 2 zeigt einen Ausschnitt aus der ersten erfindungsgemäßen Vorrichtung 10 gemäß Fig. 1. Gleiche Elemente wie zuvor tragen die gleichen Bezugszeichen, insoweit wird auch auf die vorangegangene Beschreibung verwiesen.

Die Linie 29 erstreckt sich durch den Mittelpunkt der Schwenkachse 25 (siehe Fig. 1), einen Mittelpunkt 31 eines Radius einer Kante 32 des Hebels 23 und einen Mittelpunkt 33 eines Radius einer Kante 34 des mit dem Feststellelement zusammenwirkenden Vorsprungs 12. Die Kante 32 der Anschlagsfläche 26 ist der ersten Flanke 15 bzw. der Umfangsfläche 20 zugewandt. Der Berührungspunkt der Tangente 30 mit dem hier nicht näher dargestellten Umfangskreis 17 liegt im Bereich der Kante 34 des Vorsprungs 12, der den maximalen radialen Abstand vom Mittelpunkt der Drehachse 13 hat.

Der Hebel 23 ist mit einer Eingreiftiefe 35 derart weit in Richtung der Leinenrolle 11 verschwenkt, dass die Anschlagsfläche 26 und die erste Flanke 15 aneinanderstoßen um eine Blockierung der Abrollbewegung zu gewährleisten. In dieser Wirkposition wird ein ungewolltes Gleiten des Hebels 23 über den Vorsprung 12 und dessen Kante 34 sowie ein hierdurch entstehendes Störgeräusch vermieden. Die hierfür nötige minimale Eingreiftiefe beträgt bei dem hier gezeigten Ausführbeispiel 1 mm.

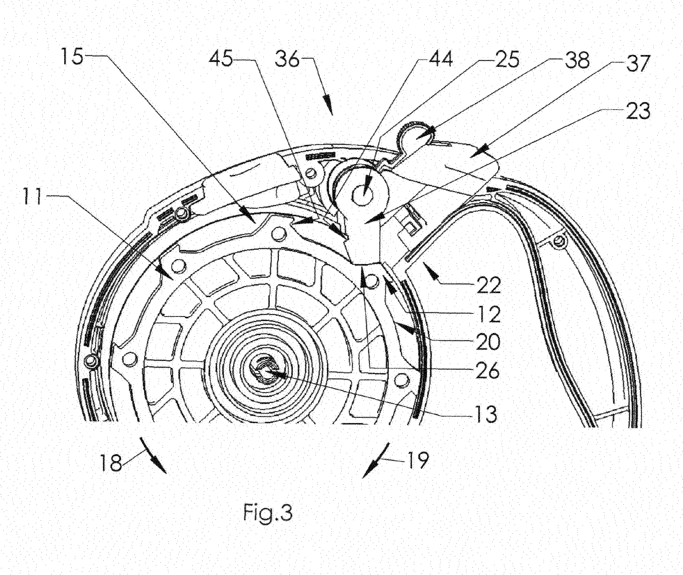

Fig. 3 zeigt eine geschnittene perspektivische Teilansicht einer zweiten erfindungsgemäßen Vorrichtung 36. Gleiche Elemente wie zuvor tragen die gleichen Bezugszeichen. Insoweit wird auch auf die vorangegangene Beschreibung verwiesen.

Die Vorrichtung 36 hat eine Blockiereinrichtung 22 mit einem Übertragungsmittel 23, das um eine Schwenkachse 25 verschwenkbar gelagert ist. Zudem weist die Blockiereinrichtung 22 ein Betätigungselement 37 auf. Bei dem hier gezeigten Ausführungsbeispiel ist das Betätigungselement 37 als eine linear bewegbare Bremstaste 37 ausgebildet. Durch eine Person ist die Bremstaste 37 linear und etwa in Richtung zur Drehachse 13 der Leinenrolle 11 zum Blockieren einer Abrollbewegung betätigbar. Die Bremstaste 37 ist mit dem Übertragungsmittel 23 gekoppelt. Hierdurch wird die Betätigungsbewegung der Bremstaste 37 in eine Schwenkbewegung bzw. Feststellbewegung des Feststellelementes 26 umwandelbar.

Des Weiteren hat die Blockiereinrichtung 22 eine Verriegelung 38. Mittels der Verriegelung 38 ist die Bremstaste 37 in einer gedrückten Position arretierbar. Nach einer Betätigung der Bremstaste 37 zum Blockieren einer Abrollbewegung und anschließendem Betätigen der Verriegelung 38 verbleibt die Bremstaste auch dann in der in Richtung der Drehachse 13 bzw. der Leinenrolle 11 gedrückten Position, wenn die Bremstaste 37 von der Person losgelassen wird. Zum Aufheben der Blockierung der Abrollbewegung ist die Verriegelung 38 lösbar. Aufgrund eines hier nicht näher dargestellten Rückstellelementes wird nach dem Lösen der Verriegelung 38 die Bremstaste 37 linear von der Drehachse 13 bzw. der Leinenrolle 11 weg bewegt, wodurch die Leinenrolle 11 für eine Abrollbewegung in Richtung des Pfeils 18 frei gegeben ist.

Das Übertragungsmittel 23 weist ein erstes Blockierelement 44 auf. Hier ist das erste Blockierelement 44 auf einer von dem Feststellelement 26 abgewandten Seite des Übertragungsmittels 23 angeordnet. In dem hier gezeigten Ausführungsbeispiel ist das erste Blockiermittel 44 als eine Nase ausgebildet. Weiter ist der zweiten Flanke 16 der Vorsprünge 12 an der Leinenrolle 11 ein zweites Blockierelement 45 zugeordnet. Das zweite Blockierelement 45 ist als eine Aufnahme für das erste Blockierelement 44 ausgebildet. Befindet sich das Übertragungsmittel 23 und das Feststellelement 26 in einer zum Blockieren der Abrollbewegung geeigneten Wirkposition, befindet sich auch das erste Blockierelement 44 in einer Wirkposition zum Blockieren einer Aufrollbewegung. Bei einer Bewegung der Leinenrolle 11 aus der Stellung gemäß Fig. 3 in Richtung der Aufrollbewegung 19 gelangen das erste Blockierelement 44 und das zweite Blockierelement 45 zum Blockieren einer weiteren Bewegung in Richtung der Aufrollbewegung 19 miteinander in Eingriff. Somit ist eine Aufrollbewegung 19 und eine Abrollbewegung 18 mindestens weitgehend vermieden.

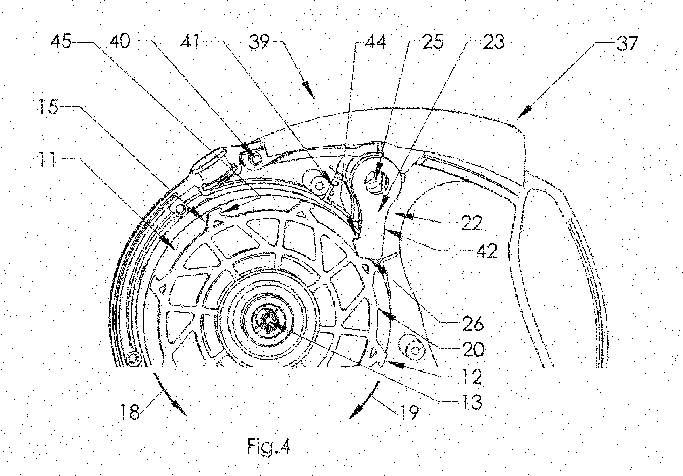

Fig. 4 zeigt eine geschnittene perspektivische Teilansicht einer weiteren erfindungsgemäßen Vorrichtung 39. Gleiche Elemente wie zuvor tragen die gleichen Bezugszeichen. Insoweit wird auch auf die vorangegangene Beschreibung verwiesen.

Die Vorrichtung 39 hat eine Blockiereinrichtung 22 mit einem Übertragungsmittel 23 und einem Betätigungselement 37, wobei das Betätigungselement 37 hier als eine drehgelagerte Bremstaste 37 ausgebildet ist. Die Bremstaste 37 ist um eine Achse 40 drehbar gelagert. Bei einer Betätigung der Bremstaste 37 wird die Drehbewegung der Bremstaste 37 als Betätigungsbewegung in einer Drehbewegung als Feststellbewegung übertragen. Hiezu ist die Bremstaste 37 mit dem Übertragungsmittel 23 gekoppelt. Dem Übertragungsmittel 23 ist das Feststellelement 26 zugeordnet. Aufgrund einer Betätigung der Bremstaste 37 in Richtung der Drehachse 13 ist mittels des Feststellelementes 26 eine Blockierung der Abrollbewegung der Leinenrolle 11 erreichbar.

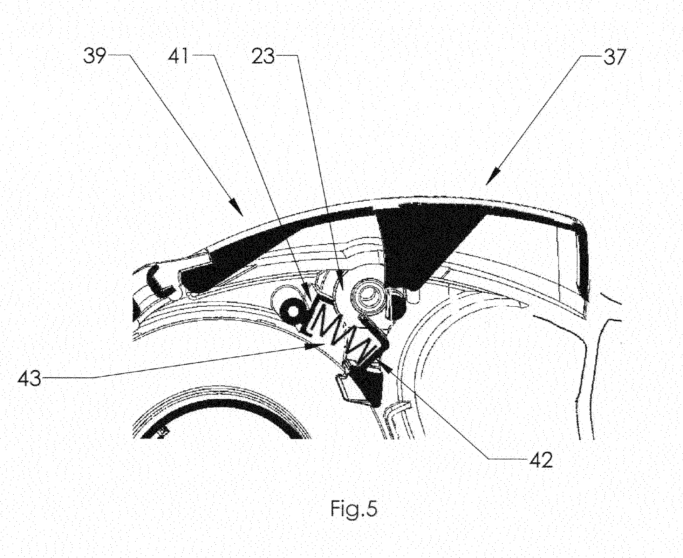

Der Blockiereinrichtung 22 ist in dem hier gezeigten Ausführungsbeispiel eine erste Aufnahme 41 und dem Übertragungsmittel 23 eine zweite Aufnahme 42 zugeordnet, deren Funktion sich aus Fig. 5 ergibt.

Fig. 5 zeigt eine geschnittene perspektivische Darstellung eines Ausschnitts der weiteren erfindungsgemäßen Vorrichtung 39 gemäß Fig. 4 mit einem Rückstellelement 43. Gleiche Merkmale wie zuvor tragen die gleichen Bezugszeichen. Insoweit wird auch auf die vorangegangene Beschreibung verwiesen.

Zwischen der ersten Aufnahme 41 und der zweiten Aufnahme 42 ist das Rückstellelement 43 angeordnet. In dem hier gezeigten Ausführungsbeispiel ist das Rückstellelement 43 als eine Druckfeder 43 ausgebildet. Hierbei bildet die erste Aufnahme 41 ein festes Widerlager für die Druckfeder 43. Die Kraft der Druckfeder 43 wirkt hierdurch derart auf die zweite Aufnahme 42, dass das Übertragungsmittel 23, das fest mit der zweiten Aufnahme 42 verbunden ist, aus einer Wirkposition zum Blockieren einer Abrollbewegung in Richtung einer Ruheposition zum Freigeben der Leinenrolle 11 für eine Abrollbewegung gedrückt wird.

Über das Übertragungsmittel 23 wird hierbei auch das mit dem Übertragungsmittel 23 gekoppelte Betätigungselement 37 in eine Ruheposition gebracht. Hierdurch ist eine Freigabe der Abrollbewegung beim Loslassen des Betätigungselementes 37 gewährleistet. Zudem ist ein durch das Rückstellelement 43 vorgegebener Widerstand beim Betätigen des Betätigungselementes 37 zum Blockieren der Abrollbewegung zu überwinden. Hierdurch wird die Gefahr einer unbeabsichtigten Blockierung der Abrollbewegung der Leinenrolle 11 vermieden. Zudem ist das Betriebsspiel in der Blockiereinrichtung 22 und zwischen dem Übertragungsmittel 23 und dem Betätigungselement 37 reduziert.

### Bezugszeichenliste :

- 10: Vorrichtung
- 11: Leinenrolle
- 12: Vorsprung
- 13: Drehachse
- 14: Kante
- 15: Erste Flanke
- 16: Zweite Flanke
- 17: Umfangskreis
- 18: Pfeil
- 19: Pfeil
- 20: Umfangsfläche
- 21: Stumpfer Winkel
- 22: Blockiereinrichtung
- 23: Übertragungsmittel
- 24: Pfeil
- 25: Schwenkachse
- 26: Feststellelement
- 27: Radius
- 28: Verriegelungswinkel
- 29: Linie
- 30: Tangente
- 31: Mittelpunkt
- 32: Kante
- 33: Mittelpunkt
- 34: Kante
- 35: Eingreiftiefe
- 36: Vorrichtung
- 37: Betätigungselement
- 38: Verriegelung
- 39: Vorrichtung
- 40: Achse
- 41: Erste Aufnahme
- 42: Zweite Aufnahme
- 43: Rückstellelement
- 44: Erstes Blockierelement
- 45: Zweites Blockierelement

## Patentansprüche

1. Vorrichtung zum Aufrollen und Abrollen einer Leine, insbesondere zum Führen eines Tieres, mit einer Leinenrolle (11), und mit einer Blockiereinrichtung (22), die ein Betätigungselement (37) und ein Feststellelement (26) hat, wobei die Leinenrolle (11) mittels der Blockiereinrichtung (22) zum Blockieren einer Abrollbewegung der Leinenrolle (11) blockierbar und das Betätigungselement (37) mittels einer Betätigungsbewegung betätigbar ist, und wobei aufgrund der Betätigungsbewegung des Betätigungselements (37) eine Feststellbewegung des Feststellelements (26) zum Blockieren der Abrollbewegung der Leinenrolle (11) auslösbar ist, **dadurch gekennzeichnet, dass** die Betätigungsbewegung mittels eines Übertragungsmittels (23) auf eine zur Betätigungsbewegung größere Feststellbewegung des Feststellelementes (26) übertragbar ist, wobei das Feststellelement (26) zum Umwandeln einer Betätigungsbewegung in eine Schwenkbewegung verschwenkbar zum Betätigungselement (37) mit dem Betätigungselement (37) verbunden ist, und das Betätigungselement (37) eine durch eine Person bedienbare Bremstaste ist, das Feststellelement (26) ist als eine Anschlagsfläche ausgebildet und ist dem als Hebel ausgebildeten Übertragungsmittel (23) zugeordnet.

2. Vorrichtung nach Anspruch 1, **dadurch gekennzeichnet, dass** das Übertragungsmittel (23) einen Hebelmechanismus aufweist, wobei vorzugsweise ein Übersetzungsverhältnis zwischen der Feststellbewegung und der Betätigungsbewegung im Bereich zwischen 1,25:1 bis 10:1, insbesondere im Bereich zwischen 1,5:1 und 5:1, besonders bevorzugt von 2:1, gegeben ist.

3. Vorrichtung nach einem der vorhergehenden Ansprüche, **dadurch gekennzeichnet, dass** der Leinenrolle (11) mindestens ein Vorsprung (12) zugeordnet ist, und eine erste Flanke (15) des Vorsprungs (12) mit dem Feststellelement (26) in einer Wirkposition zum Blockieren der Abrollbewegung der Leinenrolle (11) zusammenwirkt, wobei vorzugsweise die erste Flanke (15) des Vorsprungs (12) mit einem stumpfen Öffnungswinkel (21) zu einer Umfangsfläche (20) der Leinenrolle (11) angeordnet ist.

4. Vorrichtung nach Anspruch 3, **dadurch gekennzeichnet, dass** der stumpfe Öffnungswinkel (21) zwischen 100° und 150°, insbesondere zwischen 110° und 140° liegt, besonders bevorzugt 120° ist, vorzugsweise sind mehrere Vorsprünge (12) vorgesehen und/oder die Umfangsfläche (20) ist als eine zweite Flanke (16) mindestens eines weiteren Vorsprungs (12) ausgebildet.

5. Vorrichtung nach einem der vorhergehenden Ansprüche, **dadurch gekennzeichnet, dass** das Feststellelement (26) als eine zur ersten Flanke (15) korrespondierend ausgebildete Anschlagsfläche ausgebildet ist, vorzugsweise liegt die Anschlagsfläche in einer Wirkposition zum Blockieren der Abrollbewegung der Leinenrolle (11) mindestens teilweise, insbesondere flächig, an der ersten Flanke (15) an.

6. Vorrichtung nach einem der vorhergehenden Ansprüche, **dadurch gekennzeichnet, dass** die Anschlagsfläche tangential und/oder mindestens kreisabschnittsförmig um eine Schwenkachse (25) verschwenkbar ist, wobei vorzugsweise die Anschlagsfläche, insbesondere zum Erreichen der Wirkposition zum Blockieren der Abrollbewegung der Leinenrolle (11), in eine der ersten Flanke (15) zugewandten Stellung verschwenkbar ist.

7. Vorrichtung nach einem der vorhergehenden Ansprüche, **dadurch gekennzeichnet, dass** der Hebel um eine parallel zur Drehachse der Leinenrolle (11) ausgerichtete Schwenkachse (25) verschwenkbar ist.

8. Vorrichtung nach einem der vorhergehenden Ansprüche, **dadurch gekennzeichnet, dass** der Hebel in der Wirkposition zum Blockieren der Abrollbewegung mit einem Verriegelungswinkel (28) zwischen 10° und 60°, vorzugsweise zwischen 20° und 50°, besonders bevorzugt von 30°, angeordnet ist, wobei sich der Verriegelungswinkel (28) zwischen einer Längsausrichtung des Hebels, insbesondere einer Linie (29) durch den Mittelpunkt der Schwenkachse (25) und einen Mittelpunkt (31, 33) eines Radius einer Kante (14, 32, 34) des Hebels und/oder des Vorsprungs (12), und einer Tangente (30) an einem Umfangskreis (17) der Leinenrolle (11) ergibt, wobei der Berührungspunkt der Tangente (30) mit dem Umfangskreis (17) im Bereich der Kante (14, 34) des Vorsprungs (12) ist.

9. Vorrichtung nach einem der Ansprüche 3 bis 8, **dadurch gekennzeichnet, dass** die erste Flanke (15) und/oder die Anschlagsfläche als, insbesondere zueinander korrespondierende, kreisabschnittsförmige Flächen ausgebildet sind, wobei vorzugsweise sich ein Radius (27) der kreisabschnittförmigen Flächen aufgrund eines Abstandes zwischen der Schwenkachse (25) des Übertragungsmittels (23) und der ersten Flanke (15) und/oder der Anschlagsfläche ergibt.

10. Vorrichtung nach einem der vorhergehenden Ansprüche, **dadurch gekennzeichnet, dass** eine, insbesondere durch eine Person betätigbare, Verrieglung (38) zum Verriegeln und/oder Festhalten des Betätigungselementes (37) in einer Stellung zum Blockieren der Abrollbewegung der Leinenrolle (11) vorgesehen ist.

11. Vorrichtung nach einem der vorhergehenden Ansprüche, **dadurch gekennzeichnet, dass** ein erstes Blockierelement (44) zum Blockieren einer Aufrollbewegung, insbesondere zum gemeinsamen Betätigen mit dem Feststellelement (26), vorgesehen ist, wobei vorzugsweise eine zweite Flanke (16) und/oder ein zweites Blockierelement (45) mit dem ersten Blockierelement (44) in einer Wirkposition zum Blockieren der Aufrollbewegung zusammenwirkt.

12. Vorrichtung nach einem der vorhergehenden Ansprüche, **dadurch gekennzeichnet, dass** dem Feststellelement (26) und/oder dem Übertragungsmittel (23) ein Rückstellelement (43) zum Zurückführen aus der Wirkposition zum Blockieren der Leinenrolle (11) in eine Ruheposition zum Freigeben der Leinenrolle (11) für eine Abrollbewegung zugeordnet ist, wobei vorzugsweise das Rückstellelement (43) als eine Feder ausgebildet ist.

13. Vorrichtung nach einem der vorhergehenden Ansprüche, **dadurch gekennzeichnet, dass** die Blockiereinrichtung (22), insbesondere das Feststellelement (26) und/oder das Übertragungsmittel (23), mit einer Begrenzungseinrichtung zum Festlegen einer vorgegebenen von einer maximal abrollbaren Leinenlänge abweichenden kürzeren Teilleinenlänge zusammenwirkt.

## Claims

1. Device for rolling up and unrolling a leash, in particular for leading an animal, with a leash roller (11), and with a blocking means (22), which has an actuating element (37) and a locking element (26), wherein the leash roller (11) can be blocked by means of the blocking means (22) for blocking an unrolling motion of the leash roller (11), and the actuating element can be actuated by means of an actuating motion, and wherein, based on the actuating motion of the actuating element (37), a locking motion of the locking element (26) can be triggered for blocking the unrolling motion of the leash roller (11), **characterised in that** the actuating motion is transferable by means of a transfer means (23) onto a greater locking motion of the locking element (26) for the actuating motion, wherein the locking element (26) is connected pivotably to the actuating element (37) in order for an actuating motion to be transferred into a pivoting motion of the actuating element (37), and the actuating element (37) is a brake button that can be operated by a person, the locking element (26) is designed as a stop surface and is associated to the transfer means (23) designed as a lever.

2. Device according to claim 1, **characterised in that** the transfer means (23) possesses a lever mechanism, wherein a transmission ratio between the locking motion and the actuation motion is preferably in the range of 1.25:1 to 10:1, particularly in the range between 1.5:1 and 5:1, particularly preferably 2:1.

3. Device according to one of the preceding claims, **characterised in that** at least one projection (12) is associated with the leash roller (11), and a first flank (15) of the projection (12) cooperates with the locking element (26) in an active position for blocking the unrolling motion of the leash roller (11), wherein the first flank (15) of the projection (12) is preferably arranged at an obtuse opening angle (21) to a circumferential surface (20) of the leash roller (11).

4. Device according to claim 3, **characterised in that** the obtuse opening angle (21) is between 100° and 150°, in particular between 110° and 140°, particularly preferably is 120°, preferably a plurality of projections (12) are provided and/or the circumferential surface (20) is designed as a second flank (16) of at least one additional projection (12).

5. Device according to one of the preceding claims, **characterised in that** the locking element (26) is designed as a stop face designed to correspond to the first flank (15), the stop face in an active position for blocking the unrolling motion of the leash roller (11) is preferably in contact, at least partly, especially over the whole surface, with the first flank (15).

6. Device according to one of the preceding claims, **characterised in that** the stop face is pivotable tangentially and/or at least over a segment of a circle about a pivot axis (25), wherein the stop face is preferably pivotable into a position facing the first flank (15), especially to reach the active position for blocking the unrolling motion of the leash roller (11).

7. Device according to one of the preceding claims, **characterised in that** the lever is pivotable about a pivot axis directed in parallel to the axis of rotation (25) of the leash roller (11).

8. Device according to one of the preceding claims, **characterised in that** the lever in the active position for blocking the unrolling motion is arranged with a locking angle (28) between 10° and 60°, preferably between 20° and 50°, particularly preferably at 30°, wherein the locking angle (28) is obtained between a longitudinal direction of the lever, especially a line (29) through the centre of the pivot axis (25) and a centre point (31, 33) of a radius of an edge (14, 32, 34) of the lever and/or of the projection (12), and a tangent (30) on a circumference (17) of the leash roller (11), wherein the contact point of the tangent (30) with the circumference (17) is in the area of the edge (14, 34) of the projection (12).

9. Device according to one of claims 3 to 8, **characterised in that** the first flank (15) and/or the stop face are designed in particular as mutually corresponding segmental surfaces, wherein preferably a radius (27) of the segmental surfaces is determined, based on the distance between the pivot axis (25) of the transmission means (23) and the first flank (15) and/or the stop face.

10. Device according to one of the preceding claims, **characterised in that** a locking mechanism (38), which can be actuated by a person, is provided for locking and/or fixing the actuating element (37) in a position for blocking the unrolling motion of the leash roller (11).

11. Device according to one of the preceding claims, **characterised in that** a first blocking element (44) is provided for blocking a rolling-up motion, in particular for the joint actuation with the locking element (26), wherein a second flank (16) and/or a second blocking element (45) preferably cooperates with the first blocking element (44) in an active position for blocking the rolling up motion.

12. Device according to one of the preceding claims, **characterised in that** a resetting element (43) is associated with the locking element (26) and/or the transmission means (23) in order to revert from the active position for blocking the leash roller (11) into a resting position for releasing the leash roller (11) for an unrolling motion, wherein the resetting element (43) is preferably designed as a spring.

13. Device according to one of the preceding claims, **characterised in that** the blocking means (22), especially the locking element (26) and/or the transmission means (23), cooperates with a limiting means for setting a required shorter partial leash length that differs from the maximum unrollable leash length.

## Revendications

1. Dispositif à enrouler et dérouler une laisse, en particulier pour la conduite d'un animal, comprenant un rouleau de laisse (11) et un moyen de blocage (22) pourvu d'un élément d'opération (37) et d'un élément d'arrêt (26), dans lequel ledit rouleau de laisse (11) est apte à être bloqué moyennant ledit moyen de blocage (22) à bloquer un mouvement de déroulement dudit rouleau de laisse (11) et ledit élément de commande (37) est apte à être actionné moyennant un mouvement d'actionnement, et dans lequel, compte tenu du mouvement d'actionnement dudit élément de commande (37), on peut déclencher un mouvement d'arrêt dudit élément d'arrêt (26) afin de bloquer le mouvement de déroulement dudit rouleau de laisse (11), **caractérisé en ce que** le mouvement d'actionnement peut se transmettre moyennant un moyen de transmission (23) à un mouvement d'arrêt dudit élément d'arrêt (26) plus grande que ledit mouvement d'actionnement, audit élément d'arrêt (26) étant relié audit élément de commande (37) de façon pivotable relativement audit élément de commande (37) afin de convertir un mouvement d'actionnement en un mouvement de pivotement, et **en ce que** ledit élément de commande (37) est une touche de freinage à commande per une personne, pendant que ledit élément d'arrêt (26) est configuré sous forme d'une aire de butée et est affecté audit moyen de transmission (23) configuré sous forme d'un levier.

2. Dispositif selon la revendication 1, **caractérisé en ce que** ledit moyen de transmission (23) comprend un mécanisme à levier, à un rapport de transmission entre ledit mouvement d'arrêt et ledit mouvement d'actionnement étant donné dans la gamme entre 1,25 : 1 à 10 : 1, de préférence, et en particulier dans la gamme entre 1,5 : 1 et 5 : 1, de préférence particulière de 2 : 1.

3. Dispositif selon une quelconque des revendications précédentes, **caractérisé en ce qu'**au moins une saillie est affectée audit rouleau de laisse (11) et un premier flanc (15) de ladite saillie (12) est coopère, en une position active, avec ledit élément d'arrêt pour le blocage dudit mouvement de déroulement dudit rouleau de laisse (11), audit premier flanc (15) de ladite saillie (12) étant disposé, de préférence, à un angle d'ouverture obtus (21) relativement à une surface périphérique (20) dudit rouleau de laisse (11).

4. Dispositif selon la revendication 3, **caractérisé en ce que** ledit angle d'ouverture obtus (21) a une valeur entre 100° et 150°, en particulier entre 110° et 140°, de préférence particulière de 120°!, et **en ce qu'**une pluralité de saillies (12) est disposée, de préférence, et/ou ladite surface périphérique (20) est configurée sous forme d'un deuxième flanc (16) d'au moins une autre saillie (12).

5. Dispositif selon une quelconque des revendications précédentes, **caractérisé en ce que** ledit élément d'arrêt (26) est configuré sous forme d'une aire de butée formée en correspondance avec ledit premier flanc (15), et **en ce que**, de préférence, ladite aire de butée, en une position active pour I blocage du mouvement de déroulement dudit rouleau de laisse (11), porte, au moins en partie, en particulier à plat, contre ledit premier flanc (15).

6. Dispositif selon une quelconque des revendications précédentes, **caractérisé en ce que** ladite aire de butée est pivotable tangentiellement et/ou au moins par des secteurs circulaires, autour d'un axe de pivotement (25), à ladite aire de butée étant pivotable, de préférence, en une position en face dudit premier flanc (15), en particulier afin d'achever la position active pour le blocage du mouvement de déroulement dudit rouleau de laisse (11).

7. Dispositif selon une quelconque des revendications précédentes, **caractérisé en ce que** ledit levier est pivotable autour d'un axe de pivotement (25) orienté en parallèle à l'axe de rotation dudit rouleau de laisse (11).

8. Dispositif selon une quelconque des revendications précédentes, **caractérisé en ce que** ledit levier, en la position active pour le blocage du mouvement de déroulement, est disposé à un angle de verrouillage (28) entre 10° et 60°, de préférence entre 20° et 50°, de préférence particulière de 30°, adit angle de verrouillage (28) étant formé entre une orientation longitudinale dudit levier, en particulier une ligne (29) par le centre dudit axe de pivotement (25) et un centre (31, 33) d'un rayon d'un bord (14, 32, 34) dudit levier et/ou dudit saillie (12), et une tangente (30) à un cercle périphérique (17) dudit rouleau de laisse (11), au point de contact de la tangente (30) audit cercle périphérique (17) se trouvant dan la zone dudit bord (14, 34) de ladite saillie (12).

9. Dispositif selon une quelconque des revendications 3 à 8, **caractérisé en ce que** ledit premier flanc (15) et/ou ladite aire de butée sont configurés sous forme des surfaces en segments circulaires, en particulier en correspondance l'une avec l'autre, à un rayon (27) desdits surfaces en segments circulaires résultant d'un écart entre ledit axe de pivotement (25) dudit moyen de transmission (23) et ledit premier flanc (15) et/ou ladite aire de butée.

10. Dispositif selon une quelconque des revendications précédentes, **caractérisé en ce qu'**un moyen de verrouillage (38), en particulier à commande par une personne, est disposé afin de verrouiller et/ou tenir ledit élément de commande (37) en une position pour le blocage du mouvement de déroulement dudit rouleau de laisse (11).

11. Dispositif selon une quelconque des revendications précédentes, **caractérisé en ce qu'**un premier élément de blocage (44) est disposé pour le blocage d'un mouvement d'enroulement, en particulier pour l'actionnement en commun moyennant ledit élément d'arrêt (26), à un deuxième flanc (16) et/ou un deuxième élément de blocage (45) coopérant, de préférence, avec ledit premier élément de blocage (44) en une position active pour le blocage du mouvement d'enroulement.

12. Dispositif selon une quelconque des revendications précédentes, **caractérisé en ce qu'**un élément de rappel (43) set affecté audit élément d'arrêt (26) et/ou audit moyen de transmission (23) pour le retour d'une position active pour le blocage dudit rouleau de laisse (11) en une position de repos pour l'activation dudit rouleau de laisse (11) pour un mouvement de déroulement, de préférence ledit élément de rappel (43) étant configuré en tant qu'un ressort.

13. Dispositif selon une quelconque des revendications précédentes, **caractérisé en ce que** ledit moyen de blocage (2), en particulier ledit élément d'arrêt (26) et/ou ledit moyen de transmission (23), coopère avec un moyen limiteur à déterminer une longueur de laisse partielle plus courte prédéterminée de manière divergente par rapport d'une longueur de laisse maximale déroulable.
